# NEUE EUROPÄISCHE PATENTSCHRIFT

(11) **EP 2 598 375 B2**
(45) Veröffentlichungstag und Bekanntmachung des Hinweises auf die Entscheidung über den Einspruch: **10.04.2019**
(45) Hinweis auf die Patenterteilung: 23.03.2016
(21) Anmeldenummer: 11738965.0
(22) Anmeldetag: 16.07.2011
(51) Int. Cl.: B60Q 1/48, G08G 1/16, B60Q 9/00, G01S 15/93, B60W 30/18, G01S 15/87

(54) **ÜBERWACHUNGSSYSTEM ZUR ÜBERWACHUNG DES UMFELDES, INSBESONDERE DES RÜCKRAUMES VON KRAFTFAHRZEUGEN**
MONITORING SYSTEM FOR MONITORING THE SURROUNDING AREA, IN PARTICULAR THE AREA BEHIND MOTOR VEHICLES
SYSTÈME DE SURVEILLANCE POUR LA SURVEILLANCE DE L'ENVIRONNEMENT, EN PARTICULIER DE L'ESPACE À L'ARRIÈRE DE VÉHICULES AUTOMOBILES

(30) Priorität: 30.07.2010 DE 102010032909
(43) Veröffentlichungstag der Anmeldung: 05.06.2013
(73) Patentinhaber: WABCO GmbH, 30453 Hannover (DE)
(72) Erfinder: LÜCKING, Christoph, 30459 Hannover (DE); RISSE, Rainer, 30982 Pattensen-Reden (DE); RONNENBERG, Udo, 30900 Wedemark (DE); STENDER, Axel, 31787 Hameln (DE)
(86) Internationale Anmeldenummer: PCT/EP2011/003556
(87) Internationale Veröffentlichungsnummer: WO 2012/013305

(56) Entgegenhaltungen:
- EP-A1- 1 909 114
- WO-A1-2006/114206
- US-A- 5 528 217
- US-A- 5 574 426
- US-A- 5 869 764
- US-A1- 2006 119 473

## Beschreibung

Die Erfindung betrifft ein Überwachungssystem zur Überwachung des Umfeldes, insbesondere des Rückraumes von Kraftfahrzeugen gemäß Oberbegriff des Anspruchs 1.

Die Überwachung des Rückraumes von Kraftfahrzeugen ist ein hochaktuelles Thema. Insbesondere die Rückwärtsfahrt birgt bei Frontsitzern erhebliche Gefahren, da der Fahrer den vollständigen Gefahrbereich nicht einsehen kann. Es besteht daher die Gefahr einer Kollision mit Baukörpern, Waren, Personen oder anderen Objekten. Beim Rückwärtsfahren mit Nutzfahrzeugen oder Baumaschinen können die Fahrzeuge an verschiedenen Stellen mit Hindernissen kollidieren, weil der Fahrzeugführer den Bereich hinter dem Fahrzeug nicht einsehen kann. Aus diesem Grunde wurden bereits verschiedene Methoden vorgeschlagen, den Rückraum des Fahrzeuges zu überwachen. Bereits eingesetzte Rückraumüberwachungssysteme verwenden meistens Abstandssensoren, die an einer Stelle oder in einer Ebene an der Rückseite des Fahrzeugs installiert sind und den Abstand zu einem Hindernis anzeigen. Hierbei bedient man sich des Ultraschall-Echo-Verfahrens und verwendet an sich bekannte Ultraschallsensoren, die allerdings nur einen begrenzten Erfassungsbereich haben, so dass es im Allgemeinen nicht möglich ist, alle Objekte hinter einem Fahrzeug zu erfassen.

Es ist auch bekannt, in einem Fahrzeug Grenzwerte insbesondere für die Fahrzeugbreite und die Fahrzeughöhe abzulegen, vgl. DE 199 28 679 A1. Die Position des Fahrzeuges wird erfasst, nähert sich das Fahrzeug relevanten Bauwerken so werden die Fahrzeugdaten mit den gespeicherten Daten des relevanten Bauwerks verglichen. Kann das Fahrzeug das Bauwerk nicht passieren, da es zu hoch oder bereit ist, wird eine Warnung an den Fahrer ausgegeben.

Durch die DE 10 2004 015 749 A1 ist eine Vorrichtung zur Bestimmung einer Durchfahrtsmöglichkeit für ein Fahrzeug bekannt. In dieser Druckschrift wird eine Vorrichtung zur Bestimmung einer Durchfahrtsmöglichkeit für ein Fahrzeug an Hindernissen vorgeschlagen, die dazu dient, abzuschätzen, ob ein Fahrzeug bezüglich seiner Fahrzeughöhe und/oder seiner Fahrzeugbreite zwischen Hindernissen hindurch fahren kann.

Aus der DE 10 2007 053 989 A1 ist eine Anordnung zur Warnung vor Hindernissen mit nicht ausreichender Durchfahrtshöhe und/oder nicht ausreichender Durchfahrtsbreite bekannt. Voraus liegender Überkopfhindernisse und/oder voraus liegende seitliche Hindernisse werden zur Erfassung von durchfahrtsrelevanten Daten der Hindernisse abgetastet, wobei gleichzeitig die Fahrbahnoberfläche mit abgetastet wird. Die ermittelten durchfahrrelevanten Daten der Hindernisse werden mit durchfahrrelevanten Daten des Fahrzeugs verglichen. Es wird ein Warnsignal an den Fahrer ausgegeben, wenn die durchfahrrelevanten Daten des Fahrzeugs die durchfahrrelevanten Daten der Hindernisse überschreiten oder mit diesen gleich sind. Die Warnsignale können optischer, akustischer oder haptischer Natur sein.

Es ist ferner ein Objekterfassungssystem von Groeneveld unter der Bezeichnung Greensight bekannt. Bei diesem Objekterfassungssystem von Groeneveld ist ein aktives Kameraerfassungssystem vorgesehen, das dem Fahrer ein komplettes Bild von der Situation hinter seinem Fahrzeug verschafft. Das Objekterfassungssystem von Groeneveld verwendet neben dem Kameraerfassungssystem ein Sensorsystem, das mit Ultraschall den Raum hinter dem Fahrzeug abtastet. Der Erfassungsbereich des Groeneveld Objekterfassungssystems ist über drei Zonen verteilt. Je näher der Gegenstand, desto durchdringender sind ein optisches und ein akustisches Warnsignal. Das Objekterfassungssystem von Groeneveld kann mit zwei zusätzlichen Ultraschalleinheiten oben an den Ecken des Fahrzeugs verwendet werden zur Erfassung von Objekten, wie herunterhängenden Schildern, halb geöffneten Rolltoren und Ästen von Bäumen. Hier werden aber nur die äußeren Kanten des Fahrzeugs überwacht.

Die bekannten Rückraumüberwachungssysteme decken den Überwachungsbereich in der Fläche gut ab. Der Überwachungsbereich wird jedoch in der Höhe nicht gut abgedeckt.

Die Aufgabe der vorliegenden Erfindung besteht deshalb darin, das Überwachungssystem der eingangs genannten Art so auszubilden, dass der Überwachungsraum bzw. der Erfassungsbereich über die gesamte Fahrzeugbreite des Überwachungssystems nicht nur in der Fläche, sondern auch in der Höhe mit relativ wenig zusätzlichem Aufwand gut abgedeckt wird.

Die Aufgabe wird durch die Merkmale des Anspruchs 1 gelöst.

Vorteilhafte und zweckmäßige Weiterbildungen sind in den Unteransprüchen angegeben.

Die Erfindung schlägt zunächst einmal vor, neben einer Hauptüberwachungsebene des Überwachungssystems wenigstens eine zusätzliche Überwachungsebene vorzusehen, wodurch der Überwachungsbereich bzw. der Erfassungsbereich des Überwachungssystems wesentlich erweitert wird, so dass Objekte, Hindernisse u. dgl. erkannt werden können, die durch die Sensoren in der Hauptüberwachungsebene allein nicht erkannt werden.

Die Erfindung verwendet Abstandssensoren am Fahrzeug insbesondere am rückwärtigen Bereich des Fahrzeugs, die gemäß einer Weiterbildung der Erfindung an sich bekannte Ultraschallsensoren sind.

Mit Hilfe des erfindungsgemäßen Überwachungssystems ist es möglich, Durchfahrtsmöglichkeiten für ein Fahrzeug an Hindernissen zu bestimmen, da vor einem Hindernis die Durchfahrtsbreite und/oder die Durchfahrtshöhe an dem Hindernis durch die Sensoren gemessen und mit durchfahrtsrelevanten Fahrzeugdaten verglichen werden können. Hierdurch ist es auch möglich, auf aktuelle Änderungen im Straßenverlauf zu reagieren. Es kann vermieden werden, dass ein Fahrer zunächst zwischen enge Hindernisse hinein fährt und anschließend zurücksetzen muss, da er die Hindernisse tatsächlich nicht passieren kann.

Das erfindungsgemäße Überwachungssystem kann allgemein zur Überwachung des Umfeldes von Kraftfahrzeugen verwendet werden, dergestalt, dass auch Sensoren an der Fahrzeugvorderseite angebracht werden, so dass beispielsweise eine Abschätzung der Durchfahrtsbreite und/oder Durchfahrtshöhe sowohl bei einer Fahrt voraus als auch bei einem Zurücksetzen des Fahrzeugs möglich ist.

Gemäß einer Weiterbildung der Erfindung ist vorgesehen, dass die Abstandssensoren in Abhängigkeit von der Geschwindigkeit des Fahrzeugs aktivierbar sind. Je höher die Geschwindigkeit des Fahrzeugs desto schneller bzw. früher werden die Abstandssensoren aktiviert, so dass eine rechtzeitige Warnung vor einer möglichen Kollision stets gesichert ist und ein unnötiges Aktivieren des Überwachungssystems vermieden werden kann.

Bei einer vorteilhaften weiteren Ausgestaltung der Erfindung ist vorgesehen, das Überwachungssystem erst zu aktivieren bei Rückwärtsfahrten des Fahrzeuges ab einer vorgebbaren Geschwindigkeit. Hierdurch wird erreicht, dass beim Rangieren in engen Bereichen keine lästigen Warnungen ausgelöst werden.

Eine andere vorteilhafte weitere Ausgestaltung besteht darin, bei erkannter Kollisionsgefahr eine automatische Abbremsung des Fahrzeuges vorzusehen, wobei die Abbremsung in Abhängigkeit von der Geschwindigkeit des Fahrzeugs erfolgt. Durch diese Maßnahmen wird eine größere Überwachungssicherheit hinter dem Fahrzeug erzielt. Erfindungsgemäß werden verschiedene Anhalteabstände der Überwachungsebenen eingestellt, so dass zum Beispiel bei einer heruntergelassenen Laderampe bei Rückwärtsfahrt ein größerer Anhalteabstand eingestellt wird als für den Dachbereich.

Um auch Gegenstände erfassen zu können, die mit dem oberen Bereich und dem unteren Bereich des Fahrzeugs kollidieren können, beispielsweise Äste von Bäumen oder tief liegende Schranken, sind gemäß einer anderen Weiterbildung der Erfindung im oberen und unteren Bereich des Fahrzeugs zusätzliche Sensoren angeordnet.

Die Erfindung soll nachfolgend anhand der beigefügten Zeichnung näher erläutert werden.

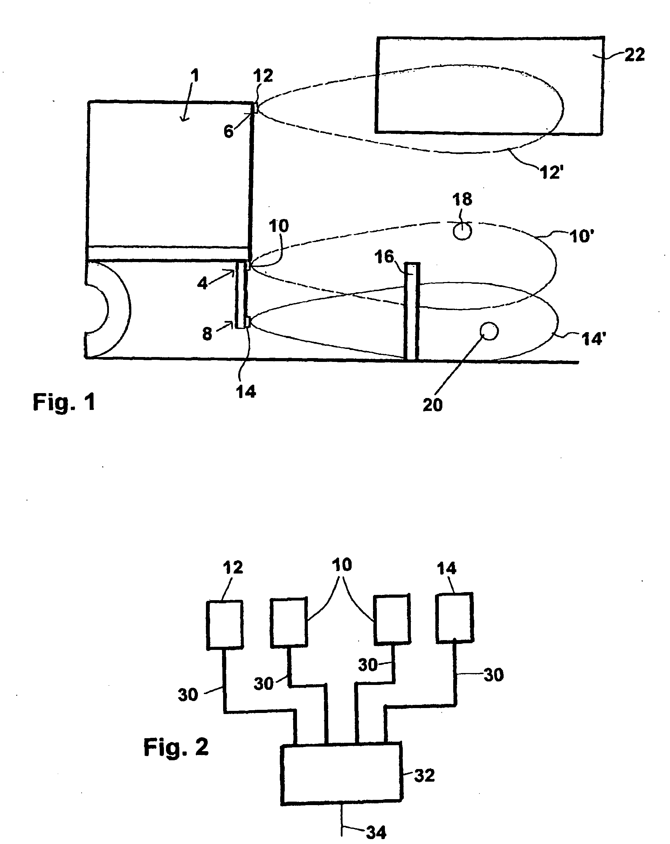

Es zeigt
- Fig. 1: schematisch den hinteren Teil eines Lastkraftwagens mit in drei Überwachungsebenen angeordneten Abstandssensoren und
- Fig. 2: ein Blockdiagramm eines erfindungsgemäßen Überwachungssystems.

Die Zeichnung zeigt in schematischer Darstellung den hinteren Teil eines Lastkraftwagens 1 mit der Lage von drei Ebenen, einer mittleren Hauptüberwachungsebene 4 und einer oberen Zusatzüberwachungsebene 6 und einer unteren Zusatzüberwachungsebene 8.

In den drei Ebenen sind Abstandssensoren 10, 12, 14 angeordnet zur Erfassung von Kollisionsgefahren begründenden und/oder die Durchfahrtshöhe und/oder die Durchfahrtsbreite begrenzenden Objekten oder Hindernissen im jeweiligen Überwachungsbereich 10', 12', 14'. In der Zeichnung ist schematisch nur jeweils ein Abstandssensor pro Ebene dargestellt. Es versteht sich, dass vorzugsweise in jeder Ebene mehrere Abstandssensoren angeordnet sind.

Mit den Abstandssensoren 10 der Hauptebene 2 sind normale Objekte, wie Pfähle 16 und hohe Schranken 18, mit der unteren Zusatzebene 8 tief liegende Schranken 20 und mit der oberen Zusatzebene 6 hoch liegende Objekte, beispielsweise überhängende Laderampen 22 wie schematisch dargestellt, Äste erfassbar.

Die Ultraschallsensoren 10, 12, 14 sind über Kabelverbindungen 30 mit einer Auswerteeinrichtung 32 verbunden. Über eine Schnittstelle 34 werden die Ergebnisse der Auswertung einem Fahrzeugrechner oder einer Fahrelektronik (nicht dargestellt) direkt gemeldet.

## Patentansprüche

1. Überwachungssystem zur Überwachung des Rückraumes von Kraftfahrzeugen und Anhängefahrzeugen mit
mehreren, in einer Hauptebene und in wenigstens einer Zusatzebene am rückwärtigen Bereich des Fahrzeugs angeordneten Abstandssensoren zur Erfassung von Kollisionsgefahr begründenden und/oder die Durchfahrtshöhe und/oder die Durchfahrtsbreite begrenzenden Objekten oder Hindernissen im jeweiligen Überwachungsbereich (10', 12', 14') und
mit einer die Abstandssensorsignale auswertenden Einrichtung (32) zur Ermittlung des aktuellen Abstands (Istwertes) des Fahrzeuges zum erfassten Objekt oder Hindernis und zum Vergleich des Istwertes mit einem vorgebbaren, fahrzeugspezifischen Abstandssollwert und zur Ausgabe eines Warnsignals bei Unterschreitung eines vorgebbaren Differenzwertes zwischen Ist- und Sollwert,
**dadurch gekennzeichnet, dass**
zusätzliche Abstandssensoren (12, 14) am Fahrzeug in wenigstens einer Zusatzebene (4, 6) derart angeordnet sind, dass Objekte (20 oder 22) und Hindernisse über die gesamte Fahrzeugbreite erfassbar sind, die durch die Abstandssensoren (10) in der Hauptebene (2) nicht erkannt werden, wobei bei erkannter Kollisionsgefahr eine automatische Abbremsung des Fahrzeugs vorgesehen ist, wobei
je Überwachungsebene verschiedene Anhalteabstände eingestellt sind, sodass bei Rückwärtsfahrt in der Überwachungsebene einer heruntergelassenen Laderampe ein größerer Anhalteabstand eingestellt ist als für den Dachbereich.

2. Überwachungssystem nach Anspruch 1, **dadurch gekennzeichnet, dass** die Abstandssensoren (10, 12,14) Ultraschallsensoren sind.

3. Überwachungssystem nach Anspruch 1 oder 2, **dadurch gekennzeichnet, dass** die Abstandssensoren in Abhängigkeit von der Geschwindigkeit des Fahrzeugs aktivierbar sind.

4. Überwachungssystem nach einem der vorhergehenden Ansprüche, **dadurch gekennzeichnet, dass** das Überwachungssystem erst aktivierbar ist bei Rückwärtsfahrten des Fahrzeugs ab einer vorgebbaren Geschwindigkeit.

5. Überwachungssystem nach einem der Ansprüche 1 bis 3, **dadurch gekennzeichnet, dass** die Abstandssensoren pro Ebene einstellbar sind.

6. Überwachungssystem nach Anspruch 1, **dadurch gekennzeichnet, dass** die Abbremsung in Abhängigkeit von der Geschwindigkeit des Fahrzeugs erfolgt

7. Überwachungssystem nach einem der vorhergehenden Ansprüche, **dadurch gekennzeichnet, dass** im oberen und/oder unteren Bereich des Fahrzeugs weitere zusätzliche Sensoren angeordnet sind zum Abtasten und Erkennen von mit dem oberen und/oder unteren Fahrzeugbereich kollidierenden Gegenständen, wie Äste von Bäumen, überhängende Laderampen, tief liegende Schranken.

8. Überwachungssystem nach Anspruch 1, **dadurch gekennzeichnet, dass** die Abbremsung in Abhängigkeit von der Entfernung des Fahrzeugs zum erfassten Objekt erfolgt.

## Claims

1. Monitoring system for monitoring the area behind motor vehicles and trailer vehicles, having
**a)** a plurality of distance sensors, which are arranged in a main plane and in at least one additional plane in the rear area of the vehicle, for detecting objects or obstacles in the respective monitoring region (10', 12', 14') that present a risk of collision and/or that limit the passage height and/or the passage width, and
**b)** having a device (32) that evaluates the signals from the distance sensors in order to determine the current distance (actual value) of the vehicle from the detected object or obstacle, and to compare the actual value with a predefinable, vehicle-specific setpoint distance, and to output a warning signal if the value falls below a predefinable difference value between the actual and setpoint values, **characterized in that**
**c)** additional distance sensors (12, 14) are arranged on the vehicle in at least one additional plane (4, 6) in such a way that objects (20 or 22) and obstacles that are not recognized by the distance sensors (10) in the main plane (2) can be detected across the whole width of the vehicle, wherein
**d)** automatic braking of the vehicle is provided when a risk of collision is detected, wherein
**e)** different halting distances can be set for each monitoring plane,
**f)** so that a greater halting distance is set when reversing in the monitoring plane of a lowered loading ramp than for the roof area.

2. Monitoring system according to Claim 1, **characterized in that** the distance sensors (10, 12, 14) are ultrasonic sensors.

3. Monitoring system according to Claim 1 or 2, **characterized in that** the distance sensors can be activated depending on the speed of the vehicle.

4. Monitoring system according to one of the preceding claims, **characterized in that** the monitoring system can first be activated during reverse travel of the vehicle above a predefinable speed.

5. Monitoring system according to one of Claims 1 to 3, **characterized in that** the distance sensors can be set separately for each plane.

6. Monitoring system according to Claim 1, **characterized in that** the braking is carried out depending on the speed of the vehicle.

7. Monitoring system according to one of the preceding claims, **characterized in that** in the upper and/or lower area of the vehicle further additional sensors are arranged in order to scan and detect objects colliding with the upper and/or lower area of the vehicle, such as tree branches, overhanging loading ramps and low barriers.

8. Monitoring system according to Claim 1, **characterized in that** the braking is carried out depending on the distance of the vehicle from the detected object.

## Revendications

1. Système de surveillance pour la surveillance de l'espace arrière de véhicules automobiles et de remorques, avec
**a)** plusieurs capteurs de distance agencés dans un plan principal et dans au moins un plan supplémentaire dans la région arrière du véhicule, pour la détection d'objets ou d'obstacles représentant un risque de collision et/ou limitant la hauteur de passage et/ou la largeur de passage dans la zone de surveillance (10', 12', 14') respective, et
**b)** avec un dispositif d'évaluation de signaux de capteur de distance (32), pour la détection de la distance actuelle (valeur réelle) du véhicule par rapport à l'objet ou à l'obstacle détecté, et pour la comparaison de la valeur réelle avec une valeur théorique de distance prédéfinissable, spécifique au véhicule, et pour l'émission d'un signal d'alerte lorsqu'une valeur différentielle prédéfinissable entre la valeur réelle et la valeur théorique n'est pas atteinte, **caractérisé en ce que**
**c)** des capteurs de distance supplémentaires (12, 14) sont agencés de telle façon sur le véhicule dans au moins un plan supplémentaire (4, 6), que des objets (20 ou 22) et des obstacles non détectés par les capteurs de distance (10) dans le plan principal (2) peuvent être détectés sur l'ensemble de la largeur de véhicule,
**d)** un freinage automatique étant prévu en cas de risque de collision détecté,
**e)** différentes distances d'arrêt pouvant être réglées pour chaque plan de surveillance,
**f)** de telle sorte qu'en cas de marche arrière dans le plan de surveillance d'une rampe de chargement abaissée, une plus grande distance d'arrêt que pour la région du toit soit ajustée.

2. Système de surveillance selon la revendication 1, **caractérisé en ce que** les capteurs de distance (10, 12, 14) sont des capteurs d'ultrasons.

3. Système de surveillance selon la revendication 1 ou 2, **caractérisé en ce que** les capteurs de distance peuvent être activés en fonction de la vitesse du véhicule.

4. Système de surveillance selon l'une des revendications précédentes, **caractérisé en ce que** le système de surveillance ne peut être activé que pour des marches arrière du véhicule à partir d'une vitesse prédéfinissable.

5. Système de surveillance selon l'une des revendications 1 à 3, **caractérisé en ce que** les capteurs de distance peuvent être réglés pour chaque plan.

6. Système de surveillance selon la revendication 1, **caractérisé en ce que** le freinage est effectué en fonction de la vitesse du véhicule.

7. Système de surveillance selon l'une des revendications précédentes, **caractérisé en ce que** d'autres capteurs supplémentaires sont agencés dans la région supérieure et/ou dans la région inférieure du véhicule, pour capter ou détecter des objets entrant en collision avec la région supérieure et/ou inférieure du véhicule, tels que des branches d'arbre, des rampes de chargement en surplomb, des barrières basses.

8. Système de surveillance selon la revendication 1, **caractérisé en ce que** le freinage est effectué en fonction de l'éloignement du véhicule par rapport à l'objet détecté.
